(19) **Europäisches Patentamt / European Patent Office / Office européen des brevets**

(11) **EP 2 186 697 B1**

(12) **FASCICULE DE BREVET EUROPEEN**

(45) Date de publication et mention
de la délivrance du brevet:
**01.02.2012 Bulletin 2012/05**

(51) Int Cl.:
*B60T 1/10* (2006.01)  *B60K 6/12* (2006.01)
*B60W 20/00* (2006.01)  *B60T 1/093* (2006.01)

(21) Numéro de dépôt: **09172219.9**

(22) Date de dépôt: **05.10.2009**

(54) **Système et procédé de freinage hydraulique**

Hydraulisches Bremssystem und Verfahren zum dessen Betrieb

Hydraulic braking system and method

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité: **10.11.2008 FR 0806274**

(43) Date de publication de la demande:
**19.05.2010 Bulletin 2010/20**

(73) Titulaire: **Robert Bosch GmbH
70442 Stuttgart (DE)**

(72) Inventeurs:
• **Dupuis, Vincent
94100, SAINT MAUR (FR)**
• **Bertrand, Jérôme
75013, PARIS (FR)**

(74) Mandataire: **Hurwic, Aleksander Wiktor
Robert Bosch France (SAS)
126, rue de Stalingrad
93700 Drancy (FR)**

(56) Documents cités:
**DE-A1-102004 043 897    GB-A- 2 282 651
US-A1- 2006 055 239**

Printed by Jouve, 75001 PARIS (FR)

## Description

La présente invention concerne un système et un procédé de freinage hydraulique de véhicule, notamment de véhicule automobile.

On connaît déjà des systèmes de freinage qui utilisent une pression hydraulique pour appliquer des plaquettes contre un disque ou un tambour tel que c'est le cas par exemple dans le document US2002/0038742, le document FR2873975 ou le document FR2877906. Ces systèmes de freinage sont éprouvés et offrent une fiabilité importante en termes de sécurité dans le domaine du freinage automobile.

On leur connaît cependant certains inconvénients tels que l'usure par frottement des plaquettes, l'échauffement au niveau de la roue pour lequel il faut prendre garde qu'il ne nuise pas au freinage, la dissipation en pures pertes de l'énergie cinétique du véhicule.

DE 10 2004 04 3897 décrit un dispositif d'entraînement hydraulique selon le préambule de la revendication 1.

L'invention a pour but de remédier aux inconvénients de l'état connu de la technique.

Dans ce but, un premier objet de l'invention est un système de freinage hydraulique de véhicule comprenant au moins une roue d'entraînement du véhicule. Le système est remarquable en ce qu'il comprend un circuit hydraulique qui comporte:

- un premier organe hydraulique agencé pour être couplé à la roue de façon à convertir une énergie de rotation de la roue en une énergie hydraulique dans le circuit hydraulique ;
- un deuxième organe hydraulique agencé pour absorber ladite énergie hydraulique ; et
- un organe de commande agencé pour coupler le premier organe hydraulique à la roue de façon à convertir l'énergie de rotation de la roue en ladite énergie hydraulique et pour faire absorber ladite énergie hydraulique au dit deuxième organe hydraulique lorsqu'une référence d'accélération négative est appliquée à l'organe de commande.

Selon différentes variantes de mise en oeuvre préférées, le premier organe hydraulique est aussi agencé pour être couplé à la roue de façon à convertir une énergie hydraulique dans le circuit hydraulique en une énergie de rotation de la roue, le deuxième organe hydraulique est aussi agencé pour restituer ladite énergie hydraulique absorbée, l'organe de commande est agencé pour faire restituer ladite énergie hydraulique au dit deuxième organe hydraulique et pour coupler ledit premier organe hydraulique à la roue de façon à convertir ladite énergie hydraulique en énergie de rotation de la roue lorsqu'une référence d'accélération positive est appliquée à l'organe de commande, le circuit hydraulique comprend un dispositif pour évacuer une partie de l'énergie hydraulique obtenue par conversion de l'énergie de rotation de la roue et l'organe de commande est agencé pour piloter ledit dispositif de façon à évacuer une partie de l'énergie hydraulique obtenue par conversion lorsque la roue se bloque ou lorsqu'une consigne d'accélération négative est atteinte, le dispositif comprenant un réservoir à charge hydraulique minimale et une première électrovanne pilotable par ledit organe de commande de façon à transmettre au moins une partie de l'énergie hydraulique obtenue par conversion au dit réservoir, le circuit hydraulique comprend une deuxième électrovanne pilotable par ledit organe de commande pour restituer ladite énergie hydraulique absorbée au premier organe hydraulique lorsque le premier organe hydraulique est couplé à la roue de façon à convertir l'énergie hydraulique dans le circuit hydraulique en énergie de rotation de la roue, le premier organe hydraulique comprend un moteur hydraulique et/ou une pompe hydraulique, le deuxième organe hydraulique comprend un accumulateur hydraulique et l'organe de commande comprend un circuit électrique.

Un autre objet de l'invention est un procédé de freinage hydraulique de véhicule comprenant au moins une roue d'entraînement du véhicule, dans lequel une transition validée par une détection de référence d'accélération négative, active une étape dans laquelle un premier organe hydraulique couplé à la roue convertit une énergie de rotation de la roue en une énergie hydraulique et un deuxième organe hydraulique absorbe ladite énergie hydraulique.

Selon différentes variantes de mise en oeuvre préférées, une transition validée par une détection de référence d'accélération positive, active une étape dans laquelle le deuxième organe hydraulique restitue ladite énergie hydraulique absorbée et le premier organe hydraulique couplé à la roue convertit l'énergie hydraulique restituée en une énergie de rotation de la roue, une transition validée par une détection de roue bloquée ou une atteinte de consigne d'accélération négative, active une étape dans laquelle un dispositif diminue l'énergie hydraulique obtenue par conversion de l'énergie de rotation de la roue puis une transition validée par une détection de roue débloquée ou par un éloignement de consigne d'accélération négative, active une étape dans laquelle le dispositif cesse d'évacuer une partie de l'énergie hydraulique obtenue par conversion de l'énergie de rotation de la roue.

L'invention sera mieux comprise à la lecture de la description qui va suivre, donnée uniquement à titre d'exemple et faite en se référant aux dessins dans lesquels :

- la figure 1 est un schéma de système hydraulique conforme à l'invention ;
- la figure 2 montre des étapes de procédé conforme à l'invention ;
- les figures 3 à 8 montrent par rapport à une échelle de temps commune, respectivement une évolution d'accélération, de débit hydraulique, de couple sur une roue, de vitesse de véhicule, de volume et de pression accumulés.

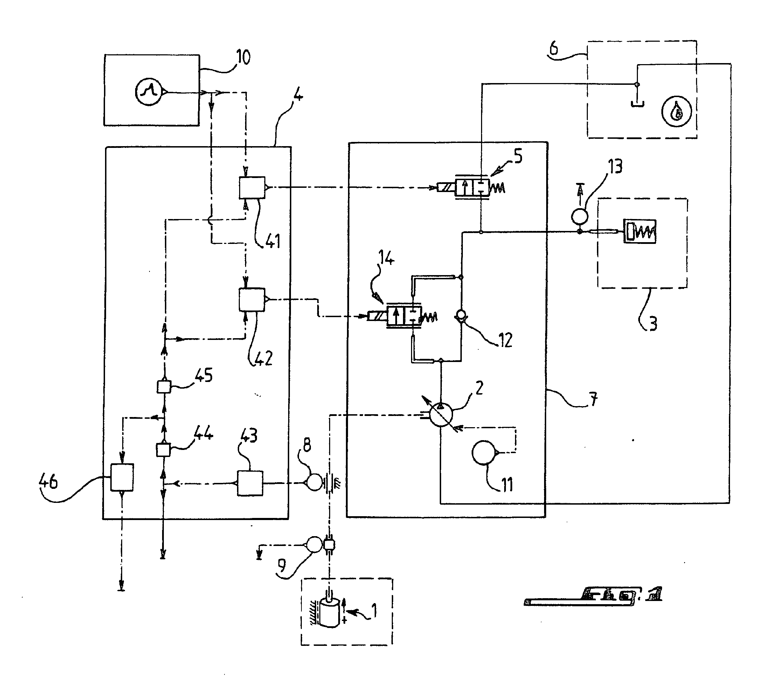

En référence à la figure 1, on explique un système de freinage hydraulique de véhicule en s'intéressant à une roue 1 d'entraînement du véhicule. Nous savons qu'un véhicule a généralement plus d'une roue et nous comprendrons que le système qui va être exposé peut être appliqué à tout ou partie de plusieurs roues du véhicule.

Un circuit hydraulique 7 comporte un premier organe hydraulique 2 agencé pour être couplé à la roue de façon à convertir une énergie de rotation de la roue en une énergie hydraulique dans le circuit hydraulique. L'organe hydraulique 2 est par exemple une pompe hydraulique ou comprend une pompe hydraulique de façon à ce qu'un couple et une vitesse de rotation, transmis par la roue 1 à un arbre de la pompe, fait que la pompe génère un débit de fluide à une pression telle, lorsque le fluide est incompressible tel que par exemple du liquide de frein, le produit du débit volumique par la pression est égal au rendement près de conversion, au produit de la vitesse de rotation par le couple transmis depuis la roue. L'énergie de rotation de la roue comprend l'énergie transmise par un moteur thermique ou électrique à la roue, l'énergie cinétique du véhicule répartie sur les roues diminuée des pertes par frottement. Le couplage à la roue peut être fait au moyen d'un embrayage ou d'une liaison mécanique permanente avec réglage de palettes de la pompe ou de brassage à vide.

Un capteur 8 de vitesse de rotation de roue et un capteur 9 de couple, sont montés sur l'arbre de transmission entre la roue et la pompe de l'organe hydraulique 2.

Le circuit hydraulique 7 comporte aussi un deuxième organe hydraulique 3 agencé pour absorber l'énergie hydraulique générée par le premier organe. Un effet de freinage est procuré quelque soit l'utilisation qui est faite de l'énergie absorbée par le deuxième organe hydraulique. A ce titre, le deuxième organe hydraulique peut comprendre un radiateur de dissipation de chaleur, un compresseur de climatisation ou d'autres convertisseurs d'énergie.

Dans l'exemple de réalisation préférée ici présenté, l'organe hydraulique 3 comprend un accumulateur hydraulique de volume maximal $V_{final}$. L'accumulateur illustré sur la figure 1, comprend ressort de raideur K qui agit sur un piston de section S pour s'opposer au remplissage de l'accumulateur. Une introduction $\Delta V$ de liquide à une pression Pac dans l'accumulateur, provoque une compression $\Delta x$ supplémentaire du ressort déjà comprimé de x. A chaque instant, on a :

$$S*Pac = Kx = KV/S$$

L'énergie absorbée par l'accumulateur est donnée par la formule :

$$E_{acc} = \int_0^{V_t} \frac{K}{S^2} V dV = \frac{K}{2}\left(\frac{V_t}{S}\right)^2 = \frac{PacV_t}{2}$$

La pression Pac dans l'accumulateur est mesurable au moyen d'un capteur 13 de pression disposé en entrée de l'accumulateur.

Le système de freinage comprend un organe de commande 4 agencé pour coupler l'organe hydraulique 2 à la roue de façon à convertir l'énergie de rotation de la roue en énergie hydraulique et pour faire absorber l'énergie hydraulique au deuxième organe hydraulique 3 lorsqu'une référence d'accélération négative est appliquée à l'organe de commande.

Dans sa version la plus simple, un clapet 12 anti-retour, disposé dans le circuit hydraulique 7 entre l'organe 2 et l'organe 3, suffit. Le clapet anti-retour 12 est monté de façon à ce que le fluide aille de l'organe 2 vers l'organe 3 lorsque la pression générée par la pompe de l'organe 2, est supérieure à la pression Pac qui règne dans l'accumulateur de l'organe 3, et à ce que le fluide ne puisse pas aller en sens inverse lorsque la pression générée par la pompe ne suffit plus à vaincre la pression de l'accumulateur. L'organe de commande peut se réduire alors à un mécanisme 11 pour lequel une référence d'accélération négative correspond à un relâchement de pédale d'accélérateur au niveau d'un poste de conduite 10, et qui agit directement sur l'organe 2 pour le mettre en mode pompe, par exemple en favorisant un débit non nul.

Dans l'exemple de réalisation présenté sur la figure 1, l'organe de commande 4 comprend un circuit électrique dans lequel deux composants 41 et 42 reçoivent en entrée un signal représentatif d'une consigne d'accélération $\gamma^*$ qui est par exemple une image d'un déplacement de pédale d'accélérateur au niveau du poste de conduite 10.

Le composant 42 pilote une électrovanne 14 à l'état bloquant en absence d'excitation électrique sur sa bobine. Lorsque le composant 42 envoie un courant électrique sur la bobine de l'électrovanne 14, l'état de l'électrovanne 14 devient passant de façon à permettre une circulation de fluide depuis l'organe hydraulique 3 vers l'organe hydraulique 2.

L'accumulateur de l'organe hydraulique 3 permet de restituer tout ou partie de l'énergie hydraulique absorbée, en fonction de l'état passant de l'électrovanne 14.

L'installation d'un moteur hydraulique dans le premier organe hydraulique, agencé pour être couplé à la roue et recevoir l'énergie hydraulique restituée, permet de convertir l'énergie hydraulique restituée en énergie de rotation de la roue.

L'utilisation d'une pompe réversible dans l'organe hydraulique 2, permet de s'abstenir du moteur hydraulique et présente un avantage supplémentaire en termes d'encombrement et de gestion d'alimentation et d'activation dans l'organe hydraulique. On connaît de nombreux types de pompes réversibles parmi les pompes à palettes, à aubes ou à piston. Lorsque le couple appliqué sur l'arbre de la pompe à partir de la roue, est positif, la pression en sortie de pompe est supérieure à la pression en entrée de pompe et la pompe fonctionne effectivement en mode pompe. A l'inverse, lorsque la pression en entrée de pompe est supérieure à la pression en sortie de pompe, le couple appliqué sur l'arbre à partir de la roue, est négatif et la pompe ne fonctionne pas en mode pompe mais au contraire en mode moteur. On remarque que la pompe se comporte naturellement comme un moteur hydraulique par simple inversion du gradient de pression entre son entrée et sa sortie. Aucune commande particulière d'une pompe réversible n'est nécessaire pour la faire fonctionner en pompe ou en moteur lorsque le mode de fonctionnement dépend simplement de l'énergie hydraulique fournie ou consommée par la pompe. On peut aussi obtenir un effet semblable en inversant un angle d'attaque des palettes ou des aubes.

Le circuit hydraulique 7 comprend un réservoir 6 dans lequel l'organe hydraulique 2 puise le fluide hydraulique lorsqu'il fonctionne en mode de pompe et dans lequel l'organe hydraulique 2 rejette le fluide hydraulique lorsqu'il fonctionne en mode de moteur. La charge hydraulique dans le réservoir est minimale lorsqu'elle est comparée à la charge hydraulique en sortie du premier ou du deuxième organe hydraulique.

Le composant 41 pilote une électrovanne 5 à l'état bloquant en absence d'excitation électrique sur sa bobine. Lorsque le composant 41 envoie un courant électrique sur la bobine de l'électrovanne 5, l'état de l'électrovanne 5 devient passant de façon à permettre une circulation de fluide depuis l'organe hydraulique 2 ou depuis l'organe hydraulique 3, vers le réservoir 6.

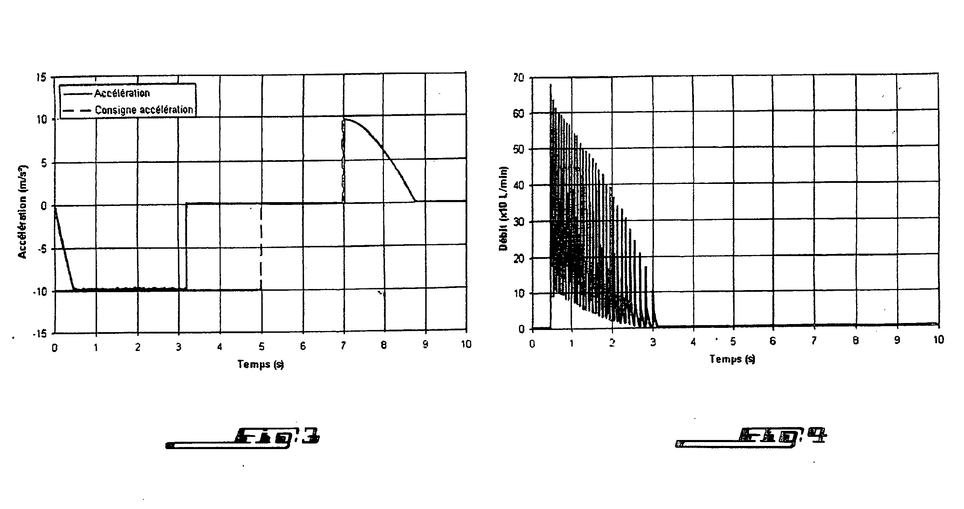

L'électrovanne 5 en combinaison avec le réservoir 6, constitue un dispositif pour évacuer une partie de l'énergie hydraulique obtenue par conversion de l'énergie de rotation de la roue. L'organe de commande 4 est agencé pour piloter ce dispositif de façon à évacuer une partie de l'énergie hydraulique obtenue par conversion lorsqu'une accélération estimée ou mesurée, est égale à une référence d'accélération négative. La capacité de l'accumulateur correspond une valeur maximale possible en valeur absolue d'accélération négative. L'intérêt de ce dispositif, en particulier en la faculté d'obtenir un couple de valeur maximale sur une plage suffisante de temps, sera mieux compris lors des explications en référence aux figures 3 à 8. L'accélération peut être facilement mesurée ou estimée à partir de la vitesse de rotation de roue qui est mesurée au moyen du capteur 8.

L'organe de commande 4 peut aussi être agencé pour piloter ce dispositif de façon à évacuer une partie de l'énergie hydraulique obtenue par conversion lorsque la roue se bloque ou glisse au-delà d'un seuil prédéterminé. De cette manière, si le freinage produit par la pompe est trop brutal, le dispositif permet de réduire le couple transmis par la roue à la pompe et ainsi permet à la roue de rattraper une vitesse de rotation cohérente avec la vitesse du véhicule et par conséquence son adhérence sur la chaussée. Le couple de freinage augmente proportionnellement à la valeur de pression en aval de la pompe. Ainsi en ramenant momentanément la pression en aval de la pompe à celle du réservoir 6 au moyen de l'électrovanne 5, on diminue momentanément le couple de freinage.

Un composant 43 reçoit en entrée un signal représentatif de la vitesse de rotation de la roue 1, donnée par le capteur 8. Ce signal permet au composant 43 de communiquer la vitesse et de transmettre cette vitesse à un composant 44 pour estimer la vitesse de déplacement du véhicule. Un composant 46 permet de calculer une distance d'arrêt et un composant 45 permet d'indiquer au composant 41 un patinage de la roue en décélération et au composant 42 un contrôle de vitesse en accélération.

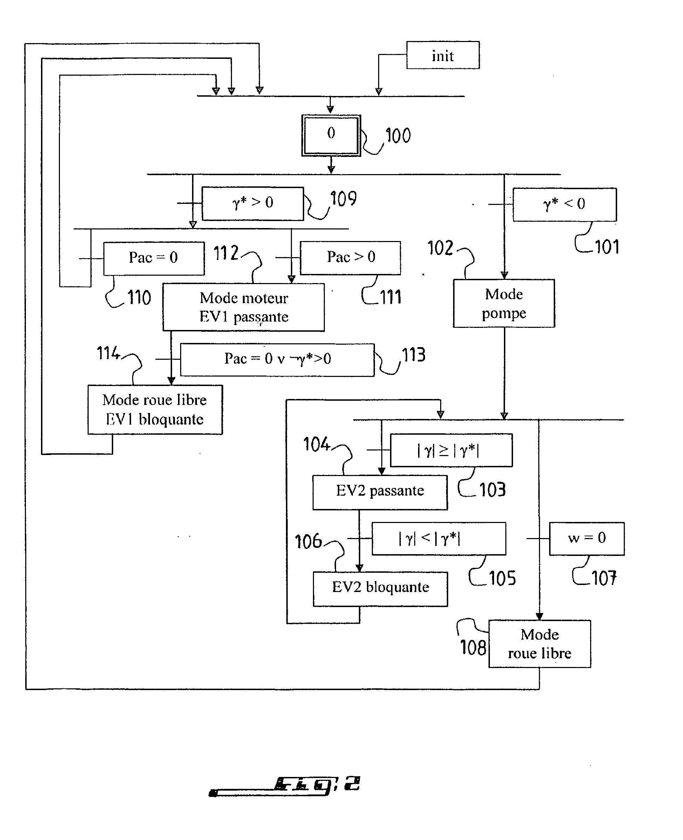

Le procédé de freinage hydraulique expliqué à présent en référence à la figure 2, est généralement dans une étape de veille 100 sans interaction avec les roues du véhicule tant que le véhicule est à vitesse de croisière ou à l'arrêt.

Lorsqu'une transition 101 est validée par une détection de référence $\gamma^*$ d'accélération négative, dans une étape 102, l'organe hydraulique 2 couplé à la roue convertit une énergie de rotation de la roue en une énergie hydraulique et l'organe hydraulique 3 absorbe l'énergie hydraulique qui résulte de cette conversion. La pompe puise le fluide hydraulique dans le réservoir 6 et le propulse dans l'organe hydraulique 3 via le clapet antiretour 12.

Lorsqu'une transition 109 est validée par une détection $\gamma^*$ de référence d'accélération positive, si la pression Pac dans l'accumulateur de l'organe hydraulique 3 est nulle, le procédé retourne dans l'étape de veille 100. En effet une pression nulle dans l'accumulateur qui valide une transition 110, indique que l'accumulateur est vide. Il n'y a alors pas d'énergie à restituer depuis l'organe hydraulique 3 et l'accélération du véhicule reste de type conventionnel, par exemple au moyen d'un moteur thermique, voire électrique dans le cas d'un véhicule hybride.

Lorsqu'à la suite d'une validation de la transition 109, une transition 111 est validée par une détection de pression Pac dans l'accumulateur de l'organe hydraulique 3, supérieure à zéro, signifie qu'il existe de l'énergie hydraulique dans l'accumulateur à restituer. Une validation de la transition 111 active alors une étape 112 dans laquelle l'organe hydraulique 3 restitue l'énergie hydraulique absorbée et l'organe hydraulique 2 couplé à la roue convertit l'énergie hydraulique restituée en une énergie de rotation de la roue. Plus précisément dans l'étape 112, l'organe hydraulique 2 fonctionne en mode de moteur hydraulique grâce à l'électrovanne 14 mise à l'état passant.

A la suite de l'étape 112, une transition 113 est validée lorsque l'énergie hydraulique accumulée dans l'organe hydraulique 3, est épuisée, en d'autre termes que la pression Pac est descendue à zéro. La transition 113 est aussi validée lorsque la consigne d'accélération γ* cesse d'être positive, c'est-à-dire par exemple lorsque le conducteur du véhicule estime avoir atteint la vitesse de croisière de son véhicule ou lorsqu'un événement extérieur demande à cesser d'accélérer, voire à décélérer.

Une validation de la transition 113 active une étape 114 dans laquelle le moteur hydraulique se met en roue libre et l'électrovanne 14 repasse à l'état bloquant de façon à retourner en étape 100 dans laquelle le circuit 7 n'interagit pas avec la roue.

A partir de l'étape 102 dans laquelle l'organe hydraulique 2 fonctionne en mode de pompe hydraulique de façon à ralentir le véhicule, une transition 107 est validée par une détection de vitesse w nulle. Une validation de la transition 107 active une étape 108 dans laquelle la pompe hydraulique se met dans un mode de roue libre de façon à retourner en étape 100 dans laquelle le circuit 7 n'interagit pas avec la roue.

Une transition 103 validée par une détection d'accélération mesurée égale à la référence d'accélération négative ou par une détection de roue bloquée, active une étape 104 dans laquelle le dispositif expliqué précédemment, diminue l'énergie hydraulique obtenue par conversion de l'énergie de rotation de la roue. Plus précisément l'électrovanne 5 est mise à l'état passant de façon à mettre l'aval de la pompe en communication avec le réservoir 6 et réduire ainsi l'effort de freinage.

A la suite de l'étape 104, une transition 105, validée par une détection de valeur absolue d'accélération négative mesurée inférieure à la valeur absolue de référence d'accélération négative ou par une détection de roue débloquée, active une étape 106 dans laquelle le dispositif cesse d'évacuer une partie de l'énergie hydraulique obtenue par conversion de l'énergie de rotation de la roue et retourne en attente de validation de l'une des transitions 103 ou 107, le mode pompe de l'étape 102 continuant à rester actif.

L'effet technique procuré par le système précédemment expliqué en référence à la figure 1 ou par le procédé précédemment expliqué en référence à la figure 2, est maintenant expliqué en référence aux figures 3 à 8.

La figure 3 est une courbe qui présente le temps exprimé en secondes en abscisse et l'accélération du véhicule exprimé en m/s$^2$ en ordonnée.

Sur les 5 premières secondes, une consigne d'accélération négative, indiquées en pointillés, de valeur égale à -10m/s$^2$ générée au niveau du poste de conduite 10, valide la transition 101. On note sur la première demi seconde, une rampe de décélération effective, indiquée en trait continu, pour atteindre une décélération de -10m/s$^2$ jusqu'à l'instant t = 3,2 s, instant auquel le véhicule s'est a priori arrêté, indépendamment de la commande de ralentissement encore maintenue. A partir de l'instant t = 7 s, une consigne d'accélération positive égale à 10 m/s$^2$, valide la transition 101. On observe un échelon d'accélération car à l'ouverture de l'électrovanne 14, le fluide libéré de l'accumulateur, alimente la pompe à pression maximale. Au fur et à mesure que l'accumulateur se vide, la pression diminue et l'accélération diminue d'autant jusqu'à une accélération nulle lorsque l'accumulateur est vide.

La figure 4 est une courbe qui présente le temps exprimé en secondes en abscisse et le débit dans l'électrovanne 5, exprimé en décalitres par minute en ordonnée.

Sur la première demi seconde correspondant à la rampe de la figure 3, l'électrovanne 5 est fermée. Le remplissage de l'accumulateur provoque une augmentation de pression en aval de la pompe jusqu'à un seuil de pression correspondant à la valeur de consigne d'accélération négative qu'il ne faut pas franchir. Dans la mesure où le véhicule n'est pas encore arrêté et que la roue continue à tourner, il convient d'empêcher la pompe de continuer à augmenter la pression. Pour ce faire, une succession de pointes de débit jusqu'à l'arrêt du véhicule, permettent à la pompe de continuer à débiter sans franchir la limite de pression qui correspond à la consigne d'accélération négative.

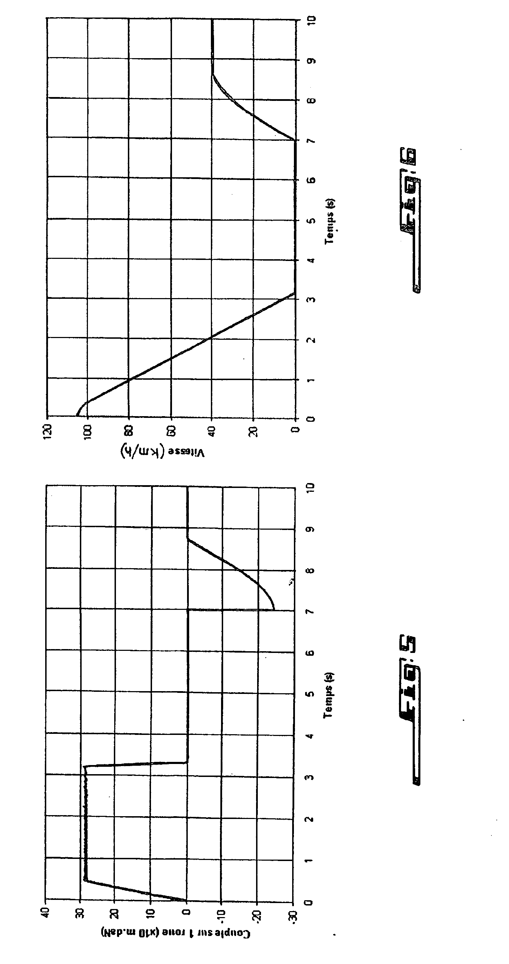

La figure 5 est une courbe qui présente le temps exprimé en secondes en abscisse et le couple délivré par une roue, exprimé en hectomètres newton en ordonnée.

Le couple commence à augmenter proportionnellement à l'augmentation de pression dans l'accumulateur puis reste à valeur maximale à quelques oscillations de faible amplitude près. Les oscillations de faibles amplitudes correspondent aux successions d'ouvertures et de refermetures de l'électrovanne 5 qui provoquent autant de chutes et de regain de pression. Le couple étant en moyenne de valeur maximale correspondant à la consigne d'accélération négative, soit ici légèrement en dessous de +30 hmN, le système produit un freinage à couple constant jusqu'à vitesse nulle du véhicule. A l'instant t = 7 s, un échelon de couple négatif proche en valeur absolue du couple de freinage, produit un redémarrage particulièrement nerveux du véhicule. Le couple redevient ensuite progressivement nul au moment où le gradient de pression dans l'organe hydraulique ne suffit plus à le faire fonctionner en mode de moteur hydraulique.

La figure 6 est une courbe qui présente le temps exprimé en secondes en abscisse et la vitesse du véhicule exprimée en km/h en ordonnée.

Pendant la première demi seconde, la diminution de vitesse de 104 km/h à 100 km/h est d'allure parabolique par intégration d'une décélération qui varie linéairement. Le couple constant représenté en figure 5, provoque ensuite une diminution linéaire de vitesse jusqu'à atteindre la vitesse nulle peu après la troisième seconde. On a ainsi obtenu une décélération de 100 à 0 km/h en moins de 3 secondes, ce qui répond aux tests AMS (acronyme de Auto Motive Sport en langue étrangère).

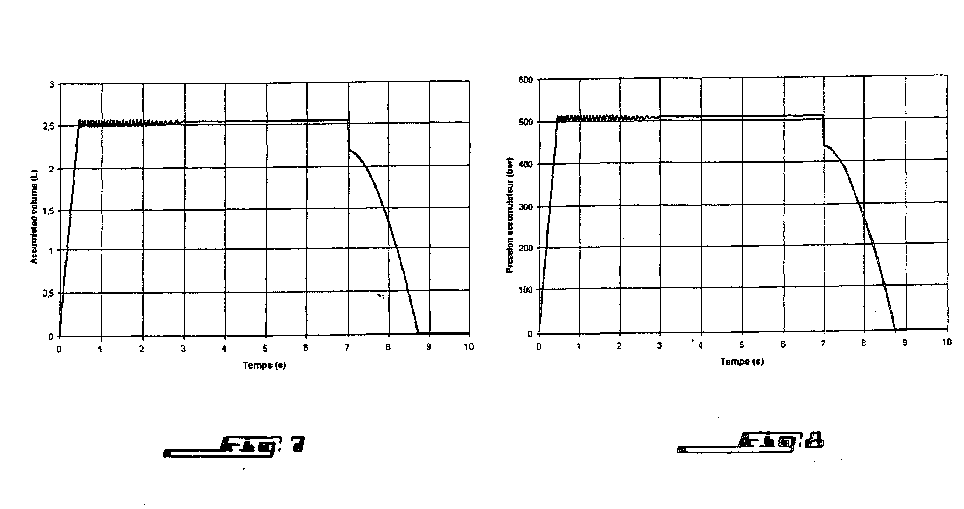

La figure 7 est une courbe qui présente le temps exprimé en secondes en abscisse et le volume de fluide dans l'accumulateur exprimé en litres en ordonnée.

Lorsqu'au bout de la première demi seconde, un volume de 2,5 litres a été accumulé dans l'organe hydraulique 3, on observe quelques oscillations de faibles amplitudes qui correspondent à un mini vidage lors d'une ouverture de l'électrovanne 5 puis à un mini remplissage lors d'une fermeture de l'électrovanne 5. Au-delà de la troisième seconde, toutes les électrovannes étant fermées et le clapet anti-retour 12 étant bloquant, le volume de fluide dans l'accumulateur est constant jusqu'à l'instant t = 7s auquel une consigne d'accélération positive ouvre l'électrovanne 14. Le ressort de l'accumulateur chasse alors brutalement une quantité de fluide qui fait redescendre quasi instantanément le volume à 2,2 litres puis progressivement jusqu'à 0 litre en suivant une courbe d'allure parabolique, la pression d'expulsion diminuant au fur et à mesure que le volume diminue.

La figure 8 est une courbe qui présente le temps exprimé en secondes en abscisse et la pression dans l'accumulateur exprimée en bars en ordonnée.

La pression est une image du volume. Pour obtenir l'effet de performance escompté qui répond aux tests AMS, il convient de prendre un accumulateur de près de 3 litres qui tienne une pression de 500 bars ou plus.

## Revendications

**1.** Système de freinage hydraulique de véhicule comprenant au moins une roue (1) d'entraînement du véhicule, comprenant un circuit hydraulique qui comporte:

- un premier organe hydraulique (2) agencé pour être couplé à la roue de façon à convertir une énergie de rotation de la roue en une énergie hydraulique dans le circuit hydraulique ;
- un deuxième organe hydraulique (3) agencé pour absorber ladite énergie hydraulique ;
- un organe de commande (4) agencé pour coupler ledit premier organe hydraulique (2) à la roue de façon à convertir l'énergie de rotation de la roue en ladite énergie hydraulique et pour faire absorber ladite énergie hydraulique au dit deuxième organe hydraulique (3) lorsqu'une référence d'accélération négative est appliquée à l'organe de commande et un dispositif pour évacuer une partie de l'énergie hydraulique obtenue par conversion de l'énergie de rotation de la roue **caractérisé en ce que** l'organe de commande (4) est agencé pour piloter ledit dispositif de façon à évacuer une partie de l'énergie hydraulique obtenue par conversion lorsqu'une accélération mesurée est égale à une référence d'accélération négative ou lorsque la roue se bloque.

**2.** Système selon la revendication 1, **caractérisé en ce que** :

- le premier organe hydraulique (2) est aussi agencé pour être couplé à la roue de façon à convertir une énergie hydraulique dans le circuit hydraulique en une énergie de rotation de la roue ;
- le deuxième organe hydraulique (3) est aussi agencé pour restituer ladite énergie hydraulique absorbée;
- l'organe de commande (4) est agencé pour faire restituer ladite énergie hydraulique au dit deuxième organe hydraulique (3) et pour coupler ledit premier organe hydraulique (2) à la roue de façon à convertir ladite énergie hydraulique en énergie de rotation de la roue lorsqu'une référence d'accélération positive est appliquée à l'organe de commande.

**3.** Système selon la revendication 1, **caractérisé en ce que** ledit dispositif comprend :

- un réservoir (6) à charge hydraulique minimale ;
- une première électrovanne (5) pilotable par ledit organe de commande (4) de façon à transmettre au moins une partie de l'énergie hydraulique obtenue par conversion au dit réservoir (6).

**4.** Système selon l'une des revendications 2 à 3, **caractérisé en ce que** le circuit hydraulique comprend une deuxième électrovanne (14) pilotable par ledit organe de commande (4) pour restituer ladite énergie hydraulique absorbée au premier organe hydraulique lorsque le premier organe hydraulique (2) est couplé à la roue de façon à convertir l'énergie hydraulique dans le circuit hydraulique en énergie de rotation de la roue.

**5.** Système selon l'une des revendications 2 à 4, **caractérisé en ce que** le premier organe hydraulique (2) comprend un moteur hydraulique.

**6.** Système selon l'une des revendications précédentes, **caractérisé en ce que** le premier organe hydraulique (2) comprend une pompe hydraulique.

**7.** Système selon l'une des revendications précédentes, **caractérisé en ce que** le deuxième organe hydraulique (3) comprend un accumulateur hydraulique.

**8.** Système selon l'une des revendications précédentes, **caractérisé en ce que** l'organe de commande (4) comprend un circuit électrique.

**9.** Procédé de freinage hydraulique de véhicule comprenant au moins une roue d'entraînement du véhicule, comprenant :

- une transition (101) validée par une détection de référence d'accélération négative ;
- une étape (102) dans laquelle un premier organe hydraulique couplé à la roue convertit une énergie de rotation de la roue en une énergie hydraulique et un deuxième organe hydraulique absorbe ladite énergie hydraulique lorsque la transition (101) est validée et ;
- une transition (103) validée par une détection d'accélération mesurée égale à la référence d'accélération négative ou par une détection de roue bloquée ;
- une étape (104) dans laquelle un dispositif diminue l'énergie hydraulique obtenue par conversion de l'énergie de rotation de la roue lorsque la transition (103) est validée ;
- une transition (105) validée par une détection d'accélération mesurée inférieure en valeurs absolues à la référence d'accélération négative ou par une détection de roue débloquée ;
- une étape (106) dans laquelle le dispositif cesse d'évacuer une partie de l'énergie hydraulique obtenue par conversion de l'énergie de rotation de la roue lorsque la transition (105) est validée.

**10.** Procédé selon la revendication 9, comprenant :

- une transition (109) validée par une détection de référence d'accélération positive ;
- une étape (112) dans laquelle le deuxième organe hydraulique restitue ladite énergie hydraulique absorbée et le premier organe hydraulique couplé à la roue, convertit l'énergie hydraulique restituée en une énergie de rotation de la roue lorsqu'au moins la transition (109) est validée.

**Claims**

**1.** Hydraulic braking system for a vehicle comprising at least one wheel (1) for driving the vehicle, comprising a hydraulic circuit which comprises:

- a first hydraulic member (2) designed to be coupled to the wheel so as to convert energy of rotation of the wheel into hydraulic energy in the hydraulic circuit;
- a second hydraulic member (3) designed to absorb the said hydraulic energy;
- a control member (4) designed to couple the said first hydraulic member (2) to the wheel in such a way as to convert the energy of rotation of the wheel into the said hydraulic energy and to cause the said second hydraulic member (3) to absorb the said hydraulic energy when a negative acceleration reference is applied to the control member and a device for removing some of the hydraulic energy obtained by converting the energy of rotation of the wheel, **characterized in that** the control member (4) is designed to operate the said device in such a way as to remove some of the hydraulic energy obtained by conversion when a measured acceleration is equal to a negative acceleration reference or when the wheel locks up.

**2.** System according to Claim 1, **characterized in that**:

- the first hydraulic member (2) is also designed to be coupled to the wheel in such a way as to convert hydraulic energy in the hydraulic circuit into energy of rotation of the wheel;
- the second hydraulic member (3) is also designed to restore the said absorbed hydraulic energy;
- the control member (4) is designed to make the said second hydraulic member (3) restore the said hydraulic energy and to couple the said first hydraulic member 92) to the wheel so as to convert the said hydraulic energy into energy of rotation of the wheel when a positive acceleration reference is applied to the control member.

**3.** System according to Claim 1, **characterized in that** the said device comprises:

- a minimum hydraulic charge reservoir (6);
- a first electrically operated valve (5) that can be operated by the said control member (4) so as to transmit at least some of the hydraulic energy obtained by conversion to the said reservoir (6).

**4.** System according to one of Claims 2 to 3, **characterized in that** the hydraulic circuit comprises a second electrically operated valve (14) that can be operated by the said control member (4) to restore the said absorbed hydraulic energy to the first hydraulic member when the first hydraulic member (2) is coupled to the wheel so as to convert the hydraulic energy in the hydraulic circuit into energy of rotation of the wheel.

**5.** System according to one of Claims 2 to 4, **characterized in that** the first hydraulic member (2) comprises a hydraulic motor.

**6.** System according to one of the preceding claims, **characterized in that** the first hydraulic member (2) comprises a hydraulic pump.

**7.** System according to one of the preceding claims, **characterized in that** the second hydraulic member (3) comprises a hydraulic accumulator.

8. System according to one of the preceding claims, **characterized in that** the control member (4) comprises an electrical circuit.

9. Method for hydraulically braking a vehicle comprising at least one wheel for driving the vehicle, comprising:

  - a transition (101) validated by detection of negative acceleration reference;
  - a step (102) in which a first hydraulic member coupled to the wheel converts energy of rotation of the wheel into hydraulic energy and a second hydraulic member absorbs the said hydraulic energy when the transition (101) is validated, and;
  - a transition (103) validated by a detection of measured acceleration equal to the negative acceleration reference or by detection that a wheel has locked up;
  - a step (104) in which a device decreases the hydraulic energy obtained by converting the energy of rotation of the wheel when the transition (103) is validated;
  - a transition (105) validated by detection of measured acceleration lower in terms of absolute value than the negative acceleration reference or by detection that a wheel is no longer locked up;
  - a step (106) in which the device stops removing some of the hydraulic energy obtained by converting the energy of rotation of the wheel when the transition (105) is validated.

10. Method according to Claim 9, comprising:

  - a transition (109) validated by detection of a positive acceleration reference;
  - a step (112) in which the second hydraulic member restores the said absorbed hydraulic energy and the first hydraulic member coupled to the wheel converts the restored hydraulic energy into energy of rotation of the wheel when at least the transition (109) is validated.

**Patentansprüche**

1. System zur hydraulischen Bremsung eines Fahrzeugs mit mindestens einem Rad (1) zum Antreiben des Fahrzeugs, wobei das System einen Hydraulikkreis mit Folgendem aufweist:

  - einem ersten hydraulischen Organ (2), das so angeordnet ist, dass es an das Rad gekoppelt ist, so dass eine Rotationsenergie des Rads in eine hydraulische Energie im Hydraulikkreis umgewandelt wird,
  - einem zweiten hydraulischen Organ (3), das zum Aufnehmen der hydraulischen Energie angeordnet ist,
  - einem Steuerorgan (4), das so angeordnet ist, dass es das erste hydraulische Organ (2) so an das Rad koppelt, dass die Rotationsenergie des Rads in die hydraulische Energie umgewandelt wird, und dazu führt, dass das zweite hydraulische Organ (3) die hydraulische Energie aufnimmt, wenn eine negative Beschleunigungsreferenz an das Steuerorgan angelegt wird, und einer Vorrichtung zum Abführen eines Teils der durch Umwandlung der Rotationsenergie des Rads erhaltenen hydraulischen Energie, **dadurch gekennzeichnet, dass** das Steuerorgan (4) so angeordnet ist, dass es die Vorrichtung so ansteuert, dass ein Teil der durch Umwandlung erhaltenen hydraulischen Energie abgeführt wird, wenn eine gemessene Beschleunigung einer negativen Beschleunigungsreferenz entspricht oder das Rad blokkiert.

2. System nach Anspruch 1, **dadurch gekennzeichnet, dass**:

  - das erste hydraulische Organ (2) auch so angeordnet ist, dass es an das Rad gekoppelt ist, so dass eine hydraulische Energie im Hydraulikkreis in eine Rotationsenergie des Rads umgewandelt wird,
  - das zweite hydraulische Organ (3) auch so angeordnet ist, dass es die aufgenommene hydraulische Energie wieder abgibt,
  - das Steuerorgan (4) so angeordnet ist, dass es dazu führt, dass das zweite hydraulische Organ (3) die hydraulische Energie wieder abgibt, und so, dass es das erste hydraulische Organ (2) so an das Rad koppelt, dass die hydraulische Energie in Rotationsenergie des Rads umgewandelt wird, wenn eine positive Beschleunigungsreferenz an das Steuerorgan angelegt wird.

3. System nach Anspruch 1, **dadurch gekennzeichnet, dass** die Vorrichtung Folgendes aufweist:

  - einen Behälter (6) mit minimaler hydraulischer Belastung,
  - ein erstes Magnetventil (5), das von dem Steuerorgan (4) so angesteuert werden kann, dass mindestens ein Teil der durch Umwandlung erhaltenen hydraulischen Energie zum Behälter (6) geleitet wird.

4. System nach einem der Ansprüche 2 bis 3, **dadurch gekennzeichnet, dass** der Hydraulikkreis ein zweites Magnetventil (14) aufweist, das von dem Steuerorgan (4) angesteuert werden kann, um die aufgenommene hydraulische Energie am ersten hydraulischen Organ wieder abzugeben, wenn das erste hydraulische Organ (2) an das Rad gekoppelt ist, so dass die hydraulische Energie im Hydraulikkreis in Rotationsenergie des Rads umgewandelt wird.

5. System nach einem der Ansprüche 2 bis 4, **dadurch gekennzeichnet, dass** das erste hydraulische Organ (2) einen hydraulischen Motor umfasst.

6. System nach einem der vorhergehenden Ansprüche, **dadurch gekennzeichnet, dass** das erste hydraulische Organ (2) eine Hydraulikpumpe umfasst.

7. System nach einem der vorhergehenden Ansprüche, **dadurch gekennzeichnet, dass** das zweite hydraulische Organ (3) einen Hydraulikspeicher umfasst.

8. System nach einem der vorhergehenden Ansprüche, **dadurch gekennzeichnet, dass** das Steuerorgan (4) einen Stromkreis umfasst.

9. Verfahren zur hydraulischen Bremsung eines Fahrzeugs mit mindestens einem Rad zum Antreiben des Fahrzeugs, wobei das Verfahren Folgendes umfasst:

   - eine Umstellung (101), die durch eine Erfassung einer negativen Beschleunigungsreferenz freigegeben wird,
   - einen Schritt (102), bei dem ein an das Rad gekoppeltes erstes hydraulisches Organ eine Rotationsenergie des Rads in eine hydraulische Energie umwandelt und ein zweites hydraulisches Organ die hydraulische Energie aufnimmt, wenn die Umstellung (101) freigegeben wird, und
   - eine Umstellung (103), die durch eine Erfassung einer gemessenen Beschleunigung, die der negativen Beschleunigungsreferenz entspricht, oder durch eine Erfassung eines blockierten Rads freigegeben wird,
   - einen Schritt (104), bei dem eine Vorrichtung die hydraulische Energie reduziert, die durch Umwandlung der Rotationsenergie des Rads erhalten wird, wenn die Umstellung (103) freigegeben wird,
   - eine Umstellung (105), die durch eine Erfassung einer gemessenen Beschleunigung, die in Bezug auf Absolutwerte geringer ist als die negative Beschleunigungsreferenz, oder durch eine Erfassung eines gelösten Rads freigegeben wird,
   - einen Schritt (106), bei dem die Vorrichtung das Abführen eines Teils der hydraulischen Energie, die durch Umwandlung der Rotationsenergie des Rads erhalten wird, einstellt, wenn die Umstellung (105) freigegeben wird.

10. Verfahren nach Anspruch 9, das Folgendes umfasst:

   - eine Umstellung (109), die durch eine Erfassung einer positiven Beschleunigungsreferenz freigegeben wird,
   - einen Schritt (112), bei dem das zweite hydraulische Organ die aufgenommene hydraulische Energie wieder abgibt und das an das Rad gekoppelte erste hydraulische Organ die wieder abgegebene hydraulische Energie in eine Rotationsenergie des Rads umwandelt, wenn zumindest die Umstellung (109) freigegeben wird.

Fig.1

init

0 ⟶ 100

$\gamma^* > 0$ ⟶ 109

$\gamma^* < 0$ ⟶ 101

Pac = 0 ⟶ 110

112

Pac > 0 ⟶ 111

102

Mode pompe

Mode moteur
EV1 passante

Pac = 0 v ¬$\gamma^*$>0 ⟶ 113

114

Mode roue libre
EV1 bloquante

104

$|\gamma| \geq |\gamma^*|$ ⟶ 103

EV2 passante

106

$|\gamma| < |\gamma^*|$ ⟶ 105

w = 0 ⟶ 107

EV2 bloquante

108

Mode
roue libre

FIG. 2

Fig. 4

Fig. 3

Fig.6

Fig.5

13

Fig. 4

Pression accumulateur (bar) vs Temps (s)

Fig. 3

Accumulated volume (L) vs Temps (s)

**EP 2 186 697 B1**

**Documents brevets cités dans la description**

- US 20020038742 A
- FR 2873975
- FR 2877906
- DE 102004043897